# EUROPEAN PATENT APPLICATION

(11) **EP 4 415 008 A1**
(43) Date of publication of application: **14.08.2024**
(21) Application number: 24156219.8
(22) Date of filing: 07.02.2024
(51) Int. Cl.: H01F 27/02, H01F 27/40, H01F 41/00, H02M 7/00, H02M 7/04, H05K 5/06, H01F 27/06, H01F 30/10, B05B 5/053

(54) **HIGH VOLTAGE MODULE, CONTROLLER WITH A HIGH VOLTAGE MODULE, AND A METHOD OF MANUFACTURING A HIGH VOLTAGE MODULE**

(30) Priority: 07.02.2023 EP 23155353
(71) Applicant: exodraft a/s, 5550 Langeskov (DK)
(72) Inventor: Larsen, Anders Høxbro, 5550 Langeskov (DK); Nielsen, Brian Rene, 5550 Langeskov (DK); Hansen, Per Holm, 5700 Svendborg (DK)
(74) Representative: Plougmann Vingtoft a/s

(57) **Abstract**

The invention relates to a high voltage module (1) for generating a DC output voltage in the range of 10,000 to 32,000 V. The high voltage module comprises a transformer (2) for receiving an AC input voltage of 20 to 350 V and converting it into an AC intermediate voltage. It further comprises a single multiplier (3) for receiving the AC intermediate voltage and converting it into the DC output voltage. The transformer and the multiplier are mounted on a module printed circuit board, PCB (7). The transformer, the multiplier and the module PCB are arranged in a potting box (10) which together with the module PCB form an enclosure (11) accommodating the transformer and the multiplier. The enclosure is filled with electrically insulating potting material (12). The invention further relates to a controller (16) for an electrostatic precipitator system, the controller comprising a high voltage module according to the invention.

## Description

### FIELD OF THE INVENTION

The present invention relates to a high voltage module for receiving an AC input voltage in the range of 20 to 350 V and generating it into a DC output voltage in the range of 10,000 V to 32,000 V. In particular, it relates to such a high voltage module which is configured for use in a controller for an electrostatic precipitator system having a discharge electrode using the DC output voltage. The invention further relates to a method of manufacturing the high voltage module.

### BACKGROUND OF THE INVENTION

The present invention has been developed for use in relation to electrostatic precipitator systems, ESP. Such systems can be used for reducing the number of fine and ultrafine particles in an aerosol or a flow of flue gas from e.g. a wood-burning stove or a pellet boiler. In an ESP, an electric field causes the aerosol or flue gas around the discharge electrode to become ionized. Hereby either free electrons or charged gas molecules become trapped on the particles and thereby charge the particles. The charged particles are repulsed from the discharge electrode towards a grounded collection electrode on which they settle and build up and from where they subsequently can be removed in a controlled manner. Hereby the amount of pollution can be significantly lowered. The electric field in an ESP is generated by a discharge electrode connected to a high voltage generator. The discharge electrode ionizes the gas in its surroundings and as a result charges the particles and delivers an electric field strong enough to push the charged particles towards the collection electrode.

The high voltage, normally in the order of 30,000 V, necessary for the functioning of an ESP is typically generated in a high voltage generator comprising a combination of a transformer and a multiplier, the multiplier having a series of multiplier circuits. Due to the high voltage, the multiplier circuits are arranged with relatively large gaps between neighbouring multiplier circuits in order to lower the risk of undesirable discharge which could cause short circuiting of the system resulting in malfunctioning or damage to the components. Since there are a number of these multiplier circuits, the multiplier has a larger size than what is due to the space being taken up by the multiplier circuits themselves. For some applications, it will be necessary to use a series of multipliers to obtian a required output voltage.

With the prior art systems, the transformer and the multiplier are provided as separate elements that are to be individually handled and connected as part of the installation process. Furthermore, they can be cumbersome to disconnect in case of a possible need for repair or replacement.

Therefore, there is a need for a more compact solution which is easier to handle during both installation and possible subsequent replacement.

### OBJECT OF THE INVENTION

It is an object of the present invention to provide a high voltage module which is more compact than a prior art high voltage module having the same electrical performance.

It is another object of the present invention to provide a high voltage module having a lower risk of short cutting during use than a comparable prior art high voltage module.

It is an object of at least some embodiments of the present invention to provide a high voltage module which is easier to handle during both installation and possible replacement than a comparable prior art high voltage module.

It is a further object of the present invention to provide an alternative to the prior art.

In particular, it may be seen as an object of the present invention to provide a high voltage module that solves the above-mentioned problems of the prior art.

### SUMMARY OF THE INVENTION

The above-described object and several other objects are intended to be obtained in a first aspect of the invention by providing a high voltage module for generating a DC output voltage in the range of 10,000 to 32,000 V during use,
the high voltage module comprising:
   - a transformer configured to receive an AC input voltage of 20 to 350 V, such as 100 to 350, such as 325 to 330 V, and convert it into an AC intermediate voltage in the range of 150 to 3500 V, such as 200 to 3300 V, and
   - a single multiplier comprising a plurality of voltage multiplier circuits arranged in series, the multiplier being configured to receive the AC intermediate voltage from the transformer at a first end and convert it into the DC output voltage at a second end,
wherein:
   - the transformer and the multiplier are mounted on a module printed circuit board, PCB,
   - the transformer, the multiplier and the module PCB are arranged in a potting box which together with the module PCB form an enclosure accommodating the transformer and the multiplier, and
   - the enclosure is filled with electrically insulating potting material.

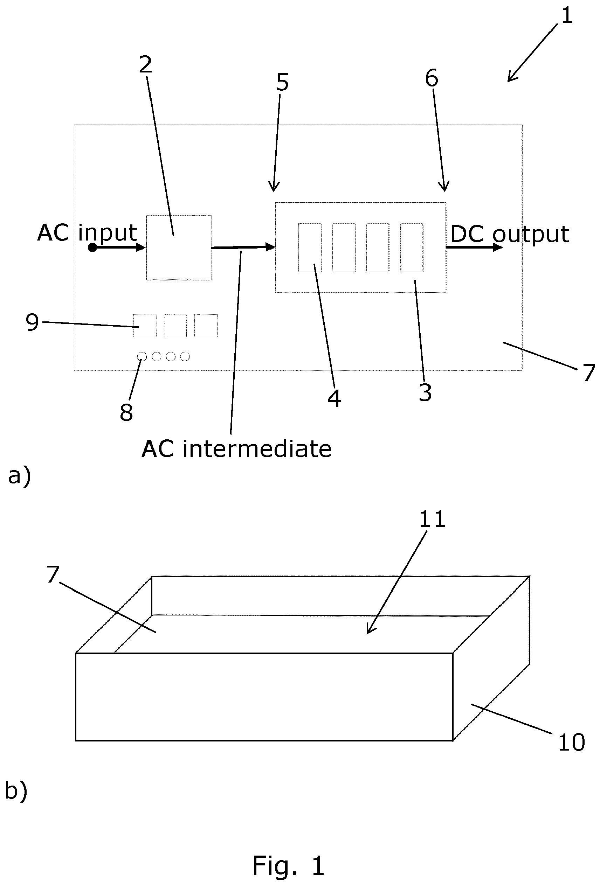

By "convert" is preferably meant that the transformer as used in the present invention typically increases the AC voltage by a predetermined factor, such as by a factor which is typically in the order of 10. Such a type of transformer is referred to as a step-up transformer. The transformer as used in the work leading to the present invention has been developed to be smaller and more compact compared to known step-up transformers capable of a providing a corresponding increase in the voltage. However, the scope of protection is not limited with respect to the size of the transformer as long as it is suitable for being arranged in the potting box. A description of a presently preferred design of the transformer will be given in relation to the description of figure 1.

The wording that the transformer and the multiplier are mounted on a module printed circuit board, PCB, will typically mean that they are mounted on the same shared module PCB, but the scope of protection also covers embodiments in which they are mounted on two separate PCBs arranged adjacent to each other.

By "accommodating" is preferably meant that the enclosure formed by the potting box and the module PCB fully encloses the transformer and the multiplier. This means that when this enclosure is filled with potting material, the transformer and the multiplier will be fully surrounded by the potting material.

A multiplier works by multiplying the starting voltage, in the present description referred to as the intermediate voltage, by a fixed factor for each step formed by a multiplier circuit. Such a multiplier circuit may also be referred to as a "voltage doubler", and it may e.g. consist of a diode and a capacitor as illustrated in the embodiments in the figures. In a known high voltage module suitable for generating a DC output voltage in the range of 10,000 to 32,000 V during use, the known technologies for making this possible would be to use several multipliers arranged in series. The present invention includes a single multiplier to obtain a compact design. This results in a higher voltage difference between each multiplier circuit and thus a higher risk of flashover. In the design according to the present invention, this risk has been overcome by arranging the components as described, i.e. including fully surrounding the transformer and the multiplier by electrically insulating potting material filled into the enclosure formed by the module PCB and the potting box.

The high voltage module has been developed for use in a controller for an electrostatic precipitator system, the controller being according to the second aspect of the invention as will be described below. Such an electrostatic precipitator system is typically used for the cleaning of a flue gas e.g. from a wood-burning stove or a pellet burner as described above. In such a use of the high voltage module, the normal output voltage is around 30,000 V, but in very moist environments, a lower output voltage is preferably used to ensure that the voltage remains below a spark threshold for given temperature and humidity conditions. During the start-up of the controller, the electrostatic precipitator system may initially be ramped-up to an output voltage in the order of 2,000 V to check that the whole system is working as intended and without any short circuits, before the high output voltage for continuous running is applied. When this has been checked, the output voltage is switched to the much higher value for the normal operation.

The use of a potting box surrounding both the transformer and the multiplier makes it possible to place the high voltage module closer to other components than what would be possible without such an enclosing potting box. Hereby the controller according to the second aspect of the invention, as will be described below, can also be made compact.

What is referred to here and in the following as "potting material" could also be called "moulding compound". A potting material is a liquid resin that is made to flow over a printed circuit board to protect the electronic components on the board after the following solidifying. Typical potting materials include epoxy, polyurethane, and silicone compounds.

In some embodiments of the invention, the multiplier circuits are arranged with gaps between neighbouring multiplier circuits of 8-14 mm, such as 10-12 mm. Such a small distance has become possible by the present inventive design as described above. Hereby it is possible to have a more compact high voltage module than what is known from prior art solutions without risking undesirable discharge between neighbouring multiplier circuits. Such undesirable discharge could cause short circuiting of the system resulting in malfunctioning or damage to the components. As an example of the overall size, a high voltage module developed during the work leading to the present invention had a size of 127x50 mm². A prior art high voltage module with corresponding performance would typically be around four times as large. In a typical design made according to the present invention, there will be four multiplier circuits, but other numbers are also covered by the scope of protection, such as three to six multiplier circuits. The less multiplier circuits for a given total increase in voltage, the higher the risk of discharge between neighbouring multiplier circuits.

The module PCB may be provided with input terminals configured for supply of power to the transformer during use. Hereby a unit is obtained which can easily be mounted on a controller PCB via which the power is supplied; this will be described in further details below. Furthermore, such a unit can easily be replaced with a new one, if necessary, without having to use special tools or handling procedures for re-establishing the connections.

In presently preferred embodiments of the invention, the module PCB is provided with through-going holes for flow of potting material into the enclosure and escape of air out of the enclosure during the filling of the enclosure with the potting material during manufacturing of the high voltage module; such a manufacturing method will be described below. Hereby the risk of entrained air is lowered, which entrained air would otherwise form regions with low electric insulation that could cause undesirable discharge during use, at least for some locations of the entrained air. The design and location of the through-going holes will typically be experimentally determined, possibly assisted by computer simulations. The incorporation of the through-going holes in the design are particularly relevant due to the compact design as that can make it harder for the potting material to flow into all regions of the enclosure without trapping air.

In some embodiments of the invention, the module PCB is provided with control terminals connected to one or more sensors arranged on the module PCB, the one or more sensors being configured to measure control parameters, such as temperature, current and/or voltage, during use of the high voltage module. At least for some applications of the high voltage module, such measurements could be used for monitoring that the high voltage module is functioning as intended.

The potting material may have a dielectric strength above 10 kV/mm, such as above 15 kV/mm, such as above 18 kV/mm.

In a second aspect, the invention relates to a controller for an electrostatic precipitator system having a discharge electrode using the output voltage from the high voltage module during use, the controller comprising:
- control components arranged on a controller PCB and configured for controlling the electrostatic precipitator system,
- a high voltage module according to the first aspect of the invention, and
- a housing comprising:
   - a base in which the controller PCB and the high voltage module are arranged, and
   - a cover connected to the base to form a closed housing.

The connection between the cover and the base is typically provided with a gasket to prevent ingress of moisture and dirt into the inner space enclosed by the housing. The housing, and in particular the base, may advantageously be provided with guiding means for ensuring a correct and stable mounting of the controller PCB and the high voltage module. Such guiding means may e.g. be in the form of one or more recesses configured to be in engagement with mating protrusions on the controller PCB and/or on the high voltage module.

The high voltage module may be mounted on the controller PCB. In presently preferred embodiments of the invention, the electrical connection is established via input terminals on the module PCB as described for some of the embodiments according to the first aspect of the invention as described above.

When a high voltage module according to the first aspect of the invention is used in a controller for an electrostatic precipitator system according to the second aspect of the invention, it typically provides a current of up to around 3 mA on the high voltage side. The module PCB must be dimensioned according to the desired maximum power, which is a function of voltage and current, to ensure that it does not get damaged during use.

In a third aspect, the invention relates to a method of manufacturing a high voltage module according to the first aspect of the invention, the method comprising the following steps:
- mounting the transformer and the multiplier on the module PCB,
- arranging the module PCB with the transformer and the multiplier in the potting box, and
- filling the potting material into the potting box and allowing it to solidify.

At least a part of the step of filling the potting material into the potting box and allowing it to solidify may be performed under vacuum. Hereby the risk of entrained air is lowered. This risk may be further lowered by having the step of filling preceded by a step of placing the potting material under vacuum for a predefined length of time. The necessary or advantageous length of time will depend on the specific potting material used as well as the amount thereof.

The first, second and third aspects of the present invention may each be combined with any of the other aspects. These and other aspects of the invention will be apparent from and elucidated with reference to the embodiments described hereinafter.

### BRIEF DESCRIPTION OF THE FIGURES

The high voltage module, the controller, and the method according to the invention will now be described in more detail with regard to the accompanying figures. The figures show one way of implementing the present invention and is not to be construed as being limiting to other possible embodiments falling within the scope of the attached claim set.
Figures 1.a and 1.b schematically show the overall design of a high voltage module according to the invention.
Figures 2.a-2.c schematically show an embodiment of a high voltage module according to the invention.
Figure 3 schematically shows an example of a module PCB provided with through-going holes.
Figure 4 schematically shows a three-dimensional exploded view of an embodiment of a controller comprising the high voltage module in figures 2.a to 2.c.
Figure 5 is a flowchart of a method according to the invention.

### DETAILED DESCRIPTION OF AN EMBODIMENT

Figure 1 schematically shows the overall design of a high voltage module 1 according to a presently preferred embodiment of the first aspect of the present invention. Figure 1.a illustrates that the high voltage module 1 comprises a transformer 2 configured to receive an AC input voltage and convert it into an AC intermediate voltage. The ranges of the AC input voltage and the AC intermediate voltage are given above. As described above, the transformer typically increases the AC voltage by a factor which is in the order of 10. The transformer as used in the work leading to the present invention has been developed to be smaller and more compact compared to known step-up transformers capable of a providing a corresponding increase in the voltage. This has been obtained by a preferred combination of the following: the core material, the primary winding, the secondary winding, and the insulator material. The tested transformer used magnetic iron as core material and Teflon as insulator material. The primary and secondary windings were made from cobber and wound into a transformer having a size of 35x27x37 mm whereas a known transformer capable of increasing the voltage by a factor in the order of 10 would typically be around 1.5-2 times larger. However, the specific details of these features may be different from those described as long as the transformer fulfils the required characteristics. Furthermore, as mentioned above, the scope of protection is not limited with respect to the size of the transformer as long as it is suitable for being arranged in the potting box.

In some embodiments of the invention, it may be necessary or advantageous to be able to adjust the frequency of the AC input voltage to the transformer. This can then be done in the following manner: The mains voltage of 230V AC (50Hz) enters the module PCB and is changed to DC voltage via a rectifier (not shown) on the module PCB, the rectifier turning the 230V AC into 300V DC. The 300V DC is transmitted to an LLC resonance converter (not shown) also arranged on the module PCB, which in turn converts it to 300V AC with a frequency that can be determined by the user of the system so that the determined frequency of the AC voltage is selected dependent on what the subsequent step-up transformer is dimensioned for.

The high voltage module 1 further comprises a multiplier 3 comprising a plurality of voltage multiplier circuits 4 arranged in series. The number of multiplier circuits 4 may differ from what is shown in figure 1. The multiplier 3 is configured to receive the AC intermediate voltage from the transformer 2 at a first end 5 and convert it into the DC output voltage at a second end 6. As shown in figure 1, the transformer 2 and the multiplier 3 are mounted on a module printed circuit board, PCB, 7. The illustrated module PCB 7 is provided with control terminals 8 connected to sensors 9 arranged on the module PCB 7. These sensors 9 are configured to measure control parameters, such as temperature, current and/or voltage, during use of the high voltage module 1. The locations of the sensors 9 may differ from what is shown schematically in figure 1.a.

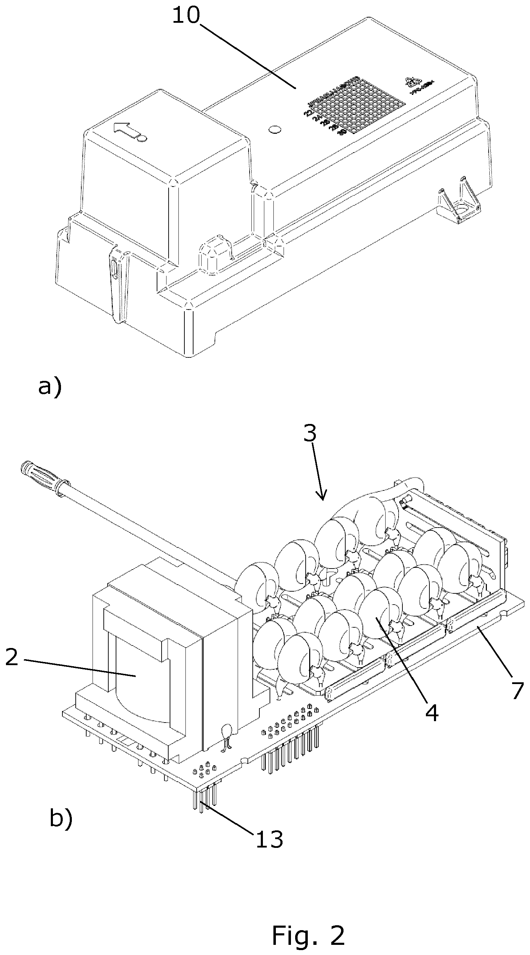

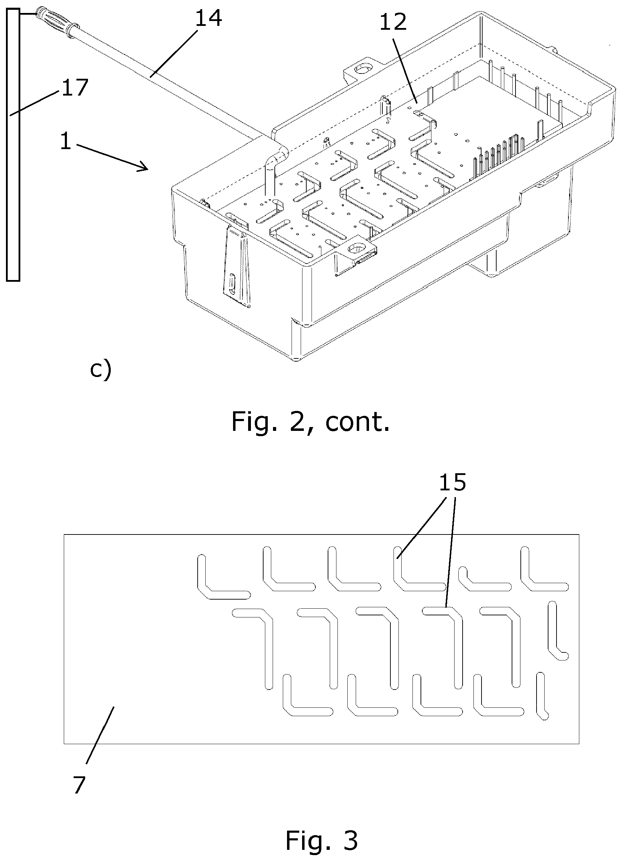

Figure 1.b schematically shows that the transformer 2, the multiplier 3 and the module PCB 7 are arranged in a potting box 10 which together with the module PCB 7 form an enclosure 11 accommodating the transformer 2 and the multiplier 3. This means that the transformer 2 and the multiplier 3 are below the module PCB 7 in this figure. The enclosure 11 is filled with electrically insulating potting material 12 as shown in figure 2.c. This potting material typically has a dielectric strength above 10 kV/mm, such as above 15 kV/mm, such as above 18 kV/mm. The potting material is not visible in figure 1.b, but it fills the cavity inside the potting box 10 up to a height depending on the amount of potting material 12 being used. Typically the amount is so that all the electronic components are covered except for the input and output terminals.

Figures 2.a-2.c schematically show three dimensional views of an embodiment of a high voltage module 1 according to the present invention. Figure 2.a shows the potting box 10 and figure 2.b shows the transformer 2 and the multiplier 3 mounted on the module PCB 7. Figure 2.c shows the high voltage module 1 ready for use. The dotted line illustrates a typical level of the potting material 12 and indicates that it does not need to extend all the way to the edges of the potting box 10. The parts are the same as in figure 1, but the orientation is different, since the potting box 10 and the module PCB 7 are to be turned up-side-down, compared to what is shown in figures 2.a and 2.b, before the potting material 12 is filled into the potting box 10. As shown in figure 2.b, the multiplier circuits 4 are arranged with gaps between neighbouring multiplier circuits. The module PCB 7 is provided with input terminals 13 configured for supply of power to the transformer 2 during use. Figure 2.c shows the cable 14 for supplying the DC output voltage to a discharge electrode 17 when the high voltage module 1 is used for an electrostatic precipitator system. The relative location, shape, and size of the discharge electrode 17 may differ from what is schematically shown in figure 2.c.

Figure 3 schematically shows an example of a module PCB 7 which is provided with through-going holes 15 for flow of potting material 12 into the enclosure 11 and escape of air out of the enclosure 11 during the filling of the enclosure 11 with the potting material 12 during manufacturing of the high voltage module 1. The design and orientation of the through-going holes 15 will be determined as a part of the design process as it will depend on the other components. The shape and size shown in figure 3 is just an example.

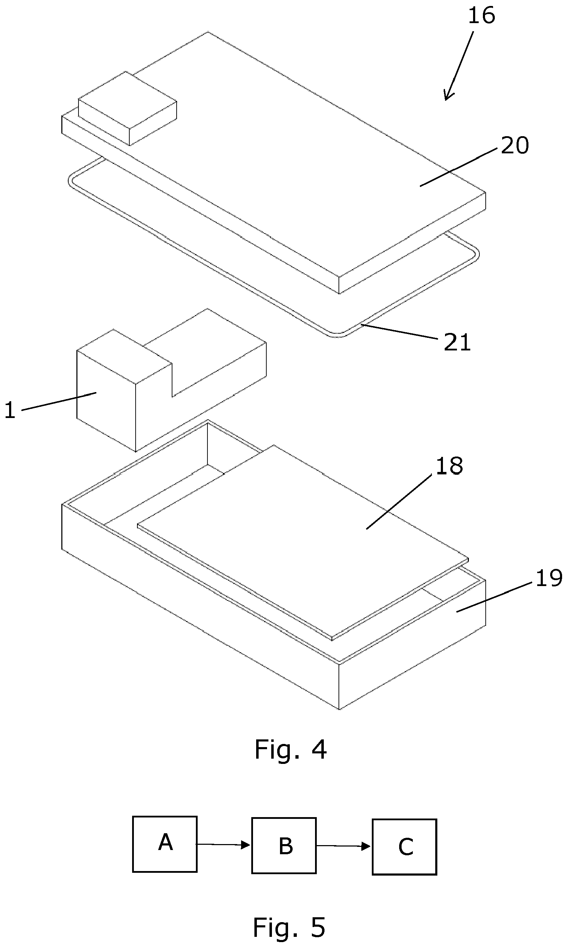

Figure 4 schematically shows an embodiment of a controller 16 according to the second aspect of the invention. The controller 16 is for an electrostatic precipitator system having a discharge electrode using the DC output voltage from the high voltage module 1 during use. The discharge electrode 17 is schematically shown as a rod in the figure 2.c, since the specific design thereof is not relevant for the present invention. The controller 16 comprises control components (not shown) which are arranged on a controller PCB 18 and configured for controlling the electrostatic precipitator system. These will not be described as they are not relevant for the understanding of the present invention. The controller 16 further comprises a high voltage module 1 according to the first aspect of the invention, such as described in the previous figures. In the illustrated embodiment, the high voltage module 1 is to be mounted on the controller PCB 18. The controller 16 has a housing for protecting the electronic and electrical components from the surroundings. The housing comprises a base 19 in which the controller PCB 18 and the high voltage module 1 are arranged and a cover 20 connected to the base 19 to form a closed housing. Typically, a gasket 21 is arranged between the base 19 and the cover 20 to ensure protection against ingress of moisture and dirt.

Figure 5 is a flowchart of a method according to the third aspect of the invention; i.e. a method of manufacturing a high voltage module 1 according to the first aspect of the invention. The method comprises the following steps:
A: Mounting the transformer 2 and the multiplier 3 on the module PCB 7.
B: Arranging the module PCB 7 with the transformer 2 and the multiplier 3 in the potting box 10.
C: Filling the potting material 12 into the potting box 10 and allowing it to solidify.

At least a part of step C may be performed under vacuum. Furthermore, step C may be preceded by a step of placing the potting material 10 under vacuum for a predefined length of time.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. High voltage module (1) for generating a DC output voltage in the range of 10,000 to 32,000 V during use,
the high voltage module (1) comprising:
- a transformer (2) configured to receive an AC input voltage of 20 to 350 V, such as 100 to 350, such as 325 to 330 V, and convert it into an AC intermediate voltage in the range of 150 to 3500 V, such as 200 to 3300 V, and
- a single multiplier (3) comprising a plurality of voltage multiplier circuits (4) arranged in series, the multiplier (3) being configured to receive the AC intermediate voltage from the transformer (2) at a first end (5) and convert it into the DC output voltage at a second end (6),
wherein:
- the transformer (2) and the multiplier (3) are mounted on a module printed circuit board, PCB (7),
- the transformer (2), the multiplier (3) and the module PCB (7) are arranged in a potting box (10) which together with the module PCB (7) form an enclosure (11) accommodating the transformer (2) and the multiplier (3), and
- the enclosure (11) is filled with electrically insulating potting material (12).

2. High voltage module (1) according to claim 1, wherein the multiplier circuits (4) are arranged with gaps between neighbouring multiplier circuits (4) of 8-14 mm, such as 10-12 mm.

3. High voltage module (1) according to claim 1 or 2, wherein the module PCB (7) is provided with input terminals (13) configured for supply of power to the transformer (2) during use.

4. High voltage module (1) according to any of the preceding claims, wherein the module PCB (7) is provided with through-going holes (15) for flow of potting material (12) into the enclosure (11) and escape of air out of the enclosure (11) during the filling of the enclosure (11) with the potting material (12) during manufacturing of the high voltage module (1).

5. High voltage module (1) according to any of the preceding claims, wherein the module PCB (7) is provided with control terminals (8) connected to one or more sensors (9) arranged on the module PCB (7), the one or more sensors (9) being configured to measure control parameters, such as temperature, current and/or voltage, during use of the high voltage module (1).

6. High voltage module (1) according to any of the preceding claims, wherein the potting material (12) has a dielectric strength above 10 kV/mm, such as above 15 kV/mm, such as above 18 kV/mm.

7. Controller (16) for an electrostatic precipitator system having a discharge electrode (17) using the DC output voltage from the high voltage module (1) during use, the controller (16) comprising:
- control components arranged on a controller PCB (18) and configured for controlling the electrostatic precipitator system,
- a high voltage module (1) according to any of the preceding claims, and
- a housing comprising:
- a base (19) in which the controller PCB (18) and the high voltage module (1) are arranged, and
- a cover (20) connected to the base (19) to form a closed housing.

8. Controller (16) according to claim 7, wherein the high voltage module (1) is mounted on the controller PCB (18).

9. Method of manufacturing a high voltage module (1) according to any claims 1 to 6, the method comprising the following steps:
- mounting the transformer (2) and the multiplier (3) on the module PCB (7),
- arranging the module PCB (7) with the transformer (2) and the multiplier (3) in the potting box (10), and
- filling the potting material (12) into the potting box (10) and allowing it to solidify.

10. Method according to claim 9, wherein at least a part of the step of filling the potting material (12) into the potting box (10) and allowing it to solidify is performed under vacuum.

11. Method according to claim 9 or 10, wherein the step of filling is preceded by a step of placing the potting material (12) under vacuum for a predefined length of time.
